# EUROPEAN PATENT APPLICATION

(11) **EP 1 045 536 A1**
(43) Date of publication of application: **18.10.2000**
(21) Application number: 98900197.9
(22) Date of filing: 09.01.1998
(51) Int. Cl.: H04B 10/20

(54) **OPTICAL FIBER COMMUNICATION NETWORK DEVICE**

(71) Applicant: Hitachi, Ltd., Chiyoda-ku, Tokyo 101 (JP)
(72) Inventor: NAKATA, Tsuneo, Kokubunji-shi, Tokyo 185 (JP)
(74) Representative: Beetz & Partner Patentanwälte
(86) International application number: JP9800055
(87) International publication number: WO9935768

(57) **Abstract**

A group of transmission lines constituting an optical communication network is divided into two or more sub-networks, each forming a transmission line ring or a transmission line chain, with the traffic between such sub-networks being divided through wavelength add/drops and inputted to cross-connects; and output from the cross-connects being added to sub-networks through wavelength add/drops. This makes it possible to decrease the scale of cross-connect equipment throughout the network.

## Description

### Technical Field

This invention relates to optical fiber communication network equipment.

### Background Art

In optical fiber communication networks, terminal equipment is provided at each point where data input or output takes place and these pieces of terminal equipment are interconnected via optical fiber transmission lines to enable communications between two desired points. As a switching method for public trunk line networks, a circuit switching technique by which each session occupies a certain transmission bandwidth is usually employed. Also, a multiplexing technique is used so that each optical fiber transmission line accommodates multiple circuits for effective use of its transmission capacity.

There are two types of digital circuit multiplexing schemes: time division multiplexing and wavelength division multiplexing. In the time division multiplexing scheme, time base is divided into fixed-length slots, a number of such slots are grouped as one frame and a circuit is assigned to each slot in the frame. In this scheme, circuit switching is performed by giving the necessary delay for slot change to the data on the circuit of interest. In order to give this delay, the switching means should have the function of storing data. The technology of storing optical signals in optical fiber memories or the like is still immature, so circuit switching in time division multiplexing is usually done on electrical signals which have been generated from optical signals by photoelectric conversion.

On the other hand, in wavelength division multiplexing, the optical carrier frequency bandwidth is divided into a number of bandwidths, each of which is allocated a circuit capacity. In this case, circuit switching is performed by frequency conversion of the carrier wave for the circuit to be switched. This is implemented by either of the two methods: frequency conversion with variable output frequencies and frequency conversion with a fixed output frequency. In the latter method, a routing means such as an optical space switch is needed to select a circuit with a desired frequency as input to a certain output frequency. Current frequency conversion means which use variable output frequencies have not yet reached commercial practicality in terms of output frequency stability and other factors. Therefore, it is realistic to use a combination of frequency conversion means with a fixed output frequency and routing means.

In circuit switching using a storage function in the time division multiplexing scheme, the unit capacity that can be switched is restricted by the memory capacity and read/write speed. The switching unit capacity range for equipment which conforms to the current world standard SONET/SDH is approximately 51-155 Mbps. On the other hand, the switching unit capacity in the wavelength division multiplexing scheme is restricted by the frequency conversion means used or the transmission capacity of the routing means used. An optical space switch as a typical routing means has a transmission bandwidth virtually corresponding to the transmission capacity of optical transmission lines so it is not a restrictive factor for the switching unit capacity. Most of the methods practically used as frequency conversion means include semiconductor laser light sources and their modulation allowable frequencies restrict the switching unit capacity. The maximum modulation allowable frequency for currently available commercial semiconductor light sources is 10 Gbps or so. This is far higher than the switching unit capacity level in the time division multiplexing scheme.

The circuit switching methods discussed above are applicable to the case of using one input optical transmission line and one output optical transmission line. For switching nodes where there are inputs from two or more transmission lines, routing must be done at the same time to decide to which transmission line each input circuit should be assigned for output. Therefore, in actual switching nodes, the function to select input/output transmission lines is required in addition to the time slot or carrier frequency conversion function. While, for time division multiplex transmission lines, this function has already been commercialized in digital cross-connect equipment conforming to SONET/SDH, such a function for wavelength division multiplex transmission lines is still in the stage of prototype production and has not been commercialized yet. The reason is that optical space switches and frequency conversion means have not yet reached commercial practicality in terms of reliability, cost and size.

In recent years, however, demand for larger network transmission capacities has been growing. If only time division multiplexing is used, demand for larger input capacities in digital cross-connect equipment currently used as circuit switching means will also grow. However, if the hardware of digital cross-connect equipment should handle input of more than 100 Gbps, its scale would have to be unrealistically large. Also in the time division multiplexing scheme, the transmission capacity per transmission line is limited to around 10 Gbps. If a larger transmission capacity is required, it may be necessary to combine the wavelength division multiplexing scheme with it for effective use of the transmission line capacity and also to lighten the burden on digital cross-connect equipment by introducing the switching means used in wavelength division multiplexing which provides larger switching unit capacities.

To cope with this growing demand for larger switching capacities, recently proposed approaches are wavelength multiplex circuit control techniques which use the entire capacity assigned to a single wavelength, as the capacity for one circuit. For example, the concept of "Lightnet" as proposed by Chlamtac et al (IEEE Journal of Lightwave Technology, Vol.11, No.5/6, pp.951-961, May/June 1993 - Reference 1) and the concept of wavelength paths as proposed by Sato et al (IEEE Journal on Selected Areas in Communications, Vol.12, No.1, pp.159-170, January 1994 - Reference 2) include proposals on control techniques and switch structures for large capacity circuit switched networks to be run on a per-wavelength basis. However, it is still difficult to apply such a technique of circuit switching on a per-wavelength basis to large scale communication networks because the switching technique for wavelength multiplexed circuits is still immature. Among the proposals on the introduction of wavelength multiplexed circuits into a communication network with a simple structure is the one made by Nagatsu et al on the introduction of wavelength paths into a ring type communication network (IEEE Journal of Lightwave Technology, Vol.15, No.10, pp.1794-1804, october 1997 - Reference 3). Here, the ring type refers to a communication network in which nodes are connected in series in a way to form a ring and each node has input/output transmission lines for at most two routes. In contrast, a communication network in which every node has input/output transmission lines for at least two routes and some of the nodes have input/output transmission lines for three or more routes, is called a "mesh topology type communication network." Mesh topology type communication networks have more freedom of circuit arrangement and fault avoidance than ring type ones, but their control is more complicated.

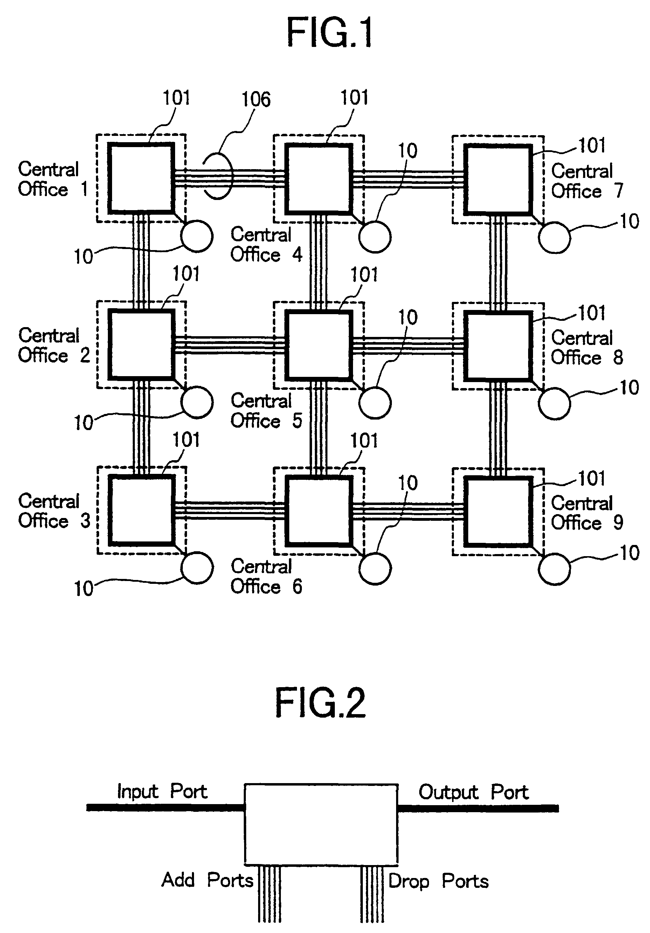

In conventional mesh topology type networks, circuit switching involves all input capacities for switching nodes, as shown in Fig.1. In this method, the number of unit switches or memories must be increased in proportion to nearly the square of the transmission line capacity. For a large capacity switching means to be applied to each wavelength multiplexed circuit in a mesh topology type communication network, a network with more freedom, it is desirable to remove redundant switching capacity to minimize the capacity to be inputted to the switching means, rather than input all passing capacities to the switching means.

### Disclosure of the Invention

The invention provides a node structure or network architecture that minimizes the scale of hardware required as switching means in optical fiber communication networks.

We assume an optical fiber network consisting of terminal equipment located at a number of points and a group of multiplex transmission lines connecting these points. Here, generally a transmission line is multiplexed so as to accommodate two or more circuits, where a transmission line based on time division multiplexing is called a time division multiplex transmission line and, on the other hand, a transmission line based on wavelength division multiplexing of time division multiplex signals with different carrier frequencies is called a wavelength multiplex transmission line.

At each crosspoint in a transmission line, a circuit switch is provided to distribute the traffic between pieces of terminal equipment. A sequence of terminal equipment and circuit switches involved in a circuit is called a path. Here, we define a bundle of time division multiplexed circuits having the capacity for one wavelength as an optical circuit. An optical circuit originates in multiplexing of several time slots into a single wavelength and terminates in decomposition of the bundle of multiplexed circuits into separate time slots. A circuit between pieces of terminal equipment, as defined for each time slot, is redefined as an electric circuit and distinguished from an optical circuit, a larger transmission capacity unit. A switch that uses an optical circuit as a unit capacity, is defined as an optical switch, and a sequence consisting of an originating point, optical switches involved and a terminating point in an optical circuit is defined as an optical path. A switch which uses an electric circuit as a switching unit is redefined as an electric switch and a sequence of terminal equipment and electric switches involved in an electric circuit is redefined as an electric path.

A circuit switch having input and output parts for the main signal and input and output ports each of which corresponds to a circuit with a smaller capacity than multiplexed input is called an add/drop (Fig.2). An input port for each circuit is called an "add port," while an output port for each circuit is called a "drop port." Particularly we define as follows: input multiplex transmission lines as wavelength multiplex transmission lines; add and drop units as optical circuits; and add/drops in which switching on a per-electric-circuit basis does not take place internally or the optical path is not terminated, as wavelength add/drops.

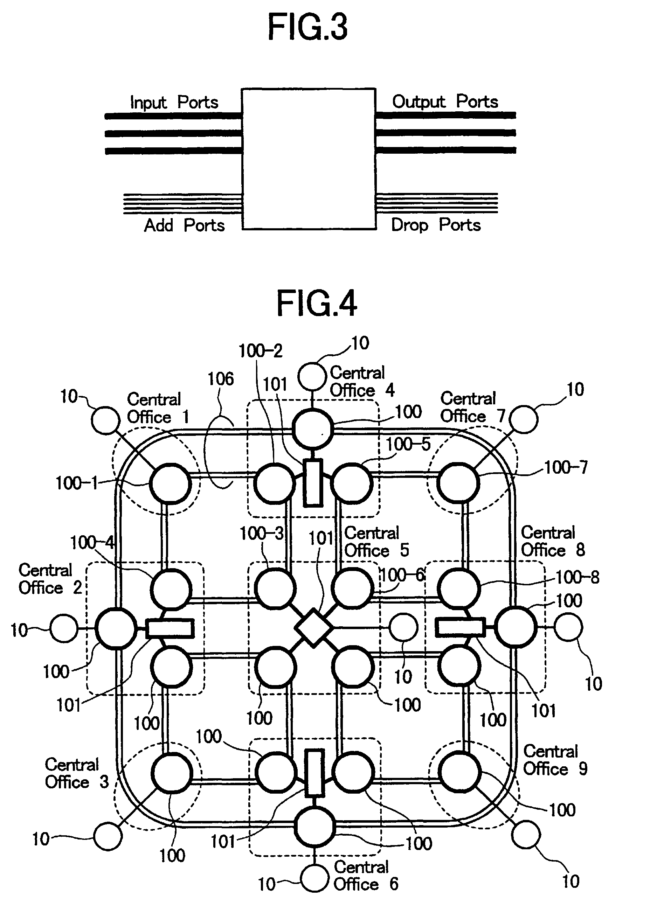

A circuit switch having two or more input ports and two or more output ports in a multiplex transmission line is called a cross-connect (Fig.3). The difference between cross-connects and add/drops is that the former has multiple input and output ports with the same unit capacity while the latter has one input multiplex transmission line and one output one. A cross-connect in which switching on a per-electric-circuit basis does not take place or an optical path is not terminated is specially defined as an optical cross-connect.

According to this invention, an optical fiber network is divided into smaller scale wavelength division multiplexed networks using wavelength add/drops. For the sake of convenience, these smaller scale networks are called sub-networks. The invention proposes a node structure or network architecture where a switching node through which multiple sub-networks pass is equipped with a cross-connect, to which only the traffic between sub-networks is inputted, reducing redundant switching capacity.

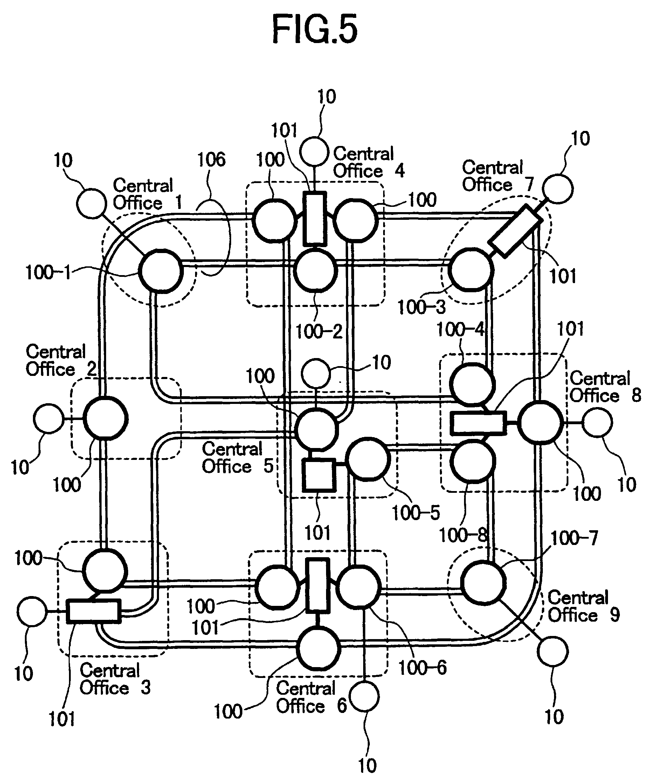

According to the invention, a combination of ring type or chain type wavelength multiplexed sub-networks as shown in Fig.4 or Fig.5 is proposed as an alternative to the transmission line arrangement as shown in Fig.1. Each sub-network consists of wavelength add/drops 100 interconnected via transmission lines 106. For instance, in Figs. 4 and 5, a transmission line ring made by interconnection of add/drops 100-1 to 100-4 and a transmission line ring made by interconnection of add/drops 100-5 to 100-8 each constitute a sub-network. Cross-connect 101 for interconnecting add/drops are provided at points included in two or more sub-networks. At each point, terminal equipment is connected to one of the sub-networks via an add/drop or cross-connect. If sub-network arrangement is made so as to minimize the traffic between sub-networks according to the actual traffic pattern, the capacity to be inputted to a cross-connect can be reduced. In comparison with the case as shown in Fig.1 in which all inputs are sent to cross-connects, this approach allows division of the switching function among switches and thus makes it possible to decrease the scale of each switch, provides higher expandability and lessens the effect of faults in a switch on the whole network.

### Brief Description of Drawings

Fig.1 shows a mesh topology type communication network composed of terminal equipment, circuit switching means and multiplex transmission lines.
Fig.2 shows the function of an add/drop.
Fig.3 shows the function of a cross-connect.
Fig.4 shows a first example of sub-network division according to the invention.
Fig.5 shows a second example of sub-network division according to the invention.
Fig.6 shows a first embodiment of the invention.
Fig.7 shows the structure of a switching node in the first embodiment of the invention.
Fig.8 shows a second embodiment of the invention.
Fig.9 shows an example of the structure of a cross-connect that does not include the function of input/output to terminal equipment.
Fig.10 shows a first example of connection between switches and terminal equipment according to the invention.
Fig.11 shows a second example of connection between switches and terminal equipment according to the invention.
Fig.12 shows a first example of the structure of a cross-connect which includes the function of input/output to terminal equipment.
Fig.13 shows a second example of the structure of a cross-connect which includes the function of input/output to terminal equipment.
Fig.14 shows an example of the structure of a switching node in a third embodiment of the invention.
Fig.15 shows a third embodiment of the invention.
Fig.16 shows an example of the structure of a switching node in a fourth embodiment of the invention.
Fig.17 shows a fourth embodiment of the invention.

### Best Mode for Carrying Out the Invention

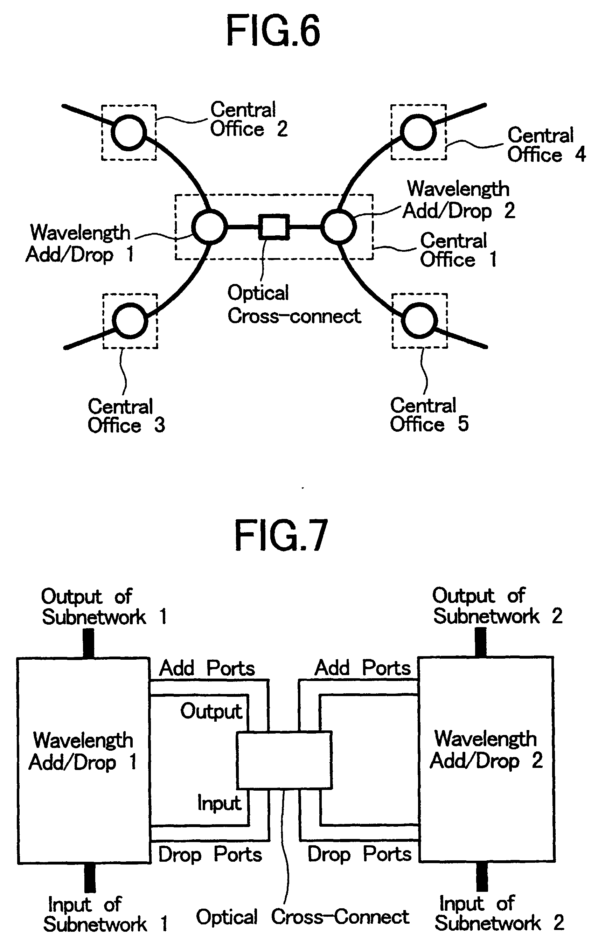

Fig.6 shows the first embodiment of the invention. In the figure, central office 1 consists of two wavelength add/drops and one optical cross-connect, while central offices 2, 3, 4 and 5 each consist of one wavelength add/drop. Wavelength add/drop 1 of central office 1 and the wavelength add/drops of central offices 2 and 3 belong to sub-network 1, while wavelength add/drop 2 of central office 1 and the wavelength add/drops of central offices 4 and 5 belong to sub-network 2. The optical cross-connect of central office 1 switches the traffic between sub-networks 1 and 2 on a per-optical-circuit basis. There should be multiple optical circuit inputs from the drop ports of add/drop 1 to the optical cross-connect and multiple optical circuit outputs to the add ports of add/drop 2. The structure of central office 1 that implements the above-said functionality is depicted in Fig.7. In this embodiment, optical circuits terminate only in terminal equipment connected to central offices.

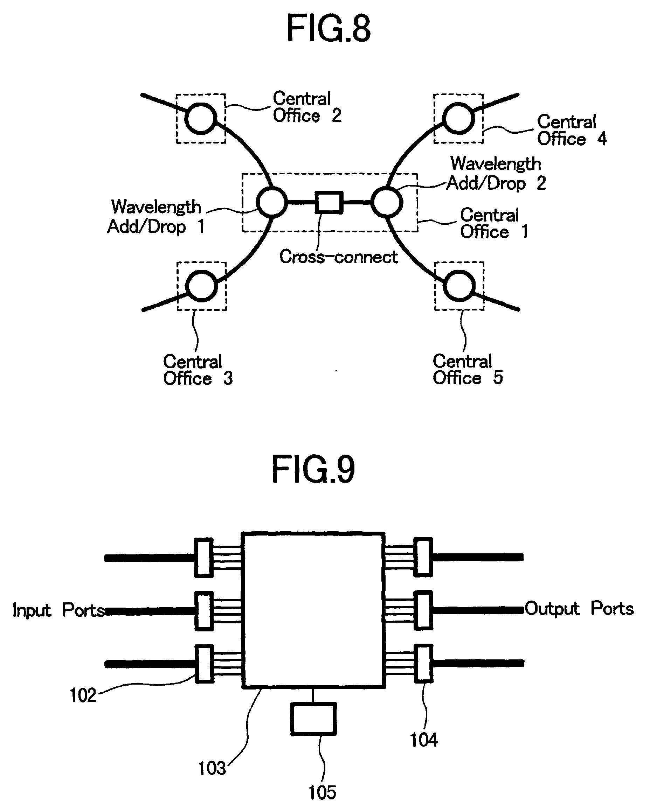

Fig.8 shows the second embodiment of the invention. In the second embodiment, the traffic between sub-networks is switched on a per-electric-circuit basis. The structure as shown in Fig.8 uses a cross-connect for switching on a per-electric-circuit basis, instead of the optical cross-connect in Fig.6. The functional structure of this cross-connect is shown in Fig.9. The cross-connect divides the input optical circuit into electric circuits and performs switching on a per-electric-circuit basis before multiplexing them into an optical circuit again for output. In this embodiment, optical circuits terminate in terminal equipment or cross-connects.

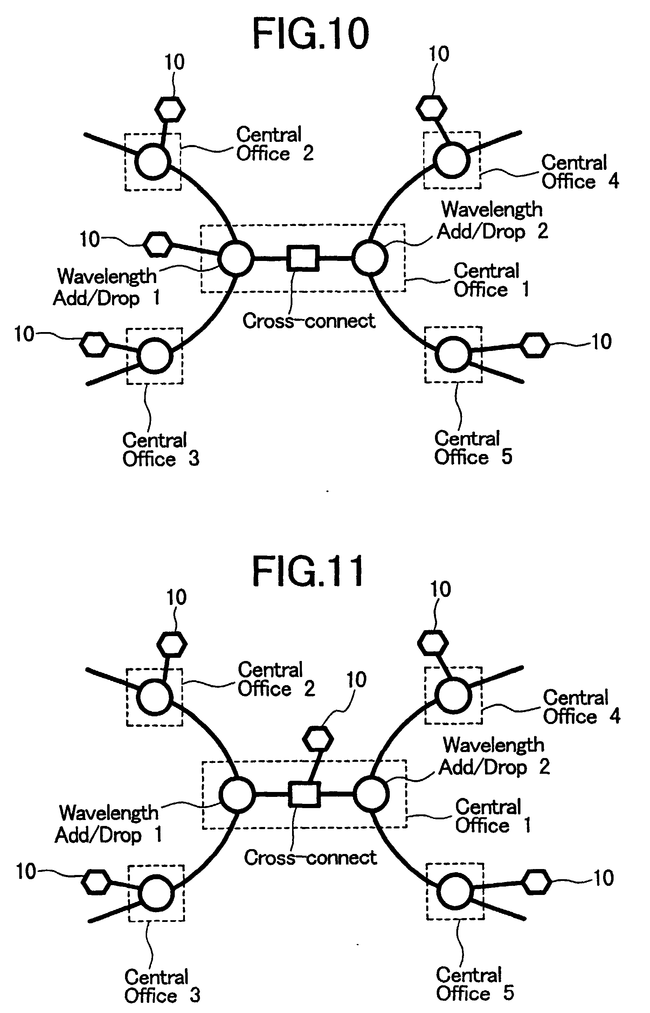

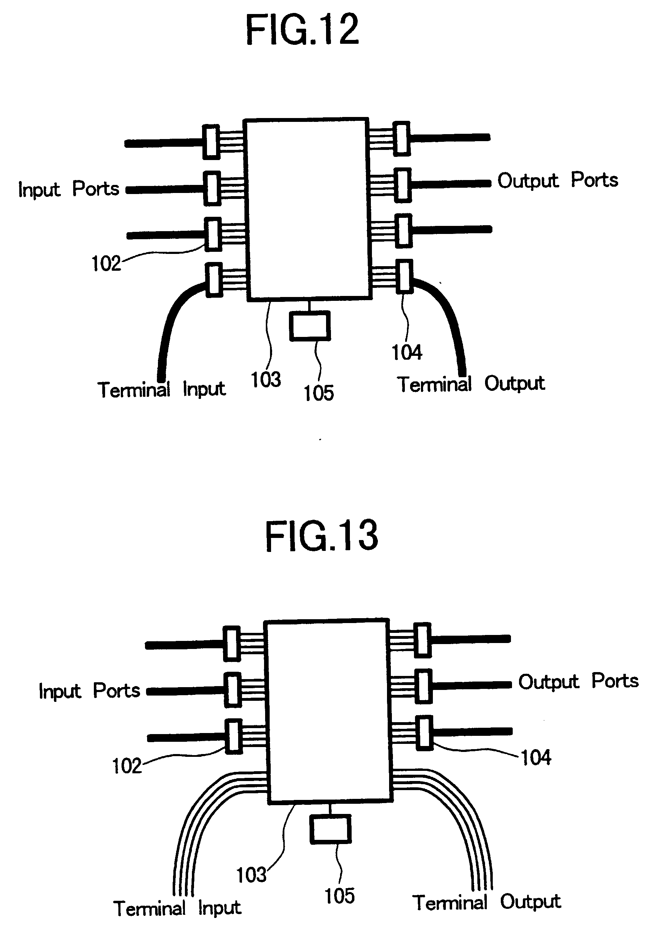

In the first and second embodiments, the wavelength add/drops of central offices 2, 3, 4 and 5 are connected to terminal equipment as devices for input/output to the network. Here, there are two possible cases: one is that central office 1 makes connection between sub-networks but does not make connection to terminal equipment, and the other is that it makes both connection between sub-networks and connection to terminal equipment. If central office 1 is connected to terminal equipment, again there are two possible cases: one is that the add and drop ports of the wavelength add/drop in central office 1 are used for the connection as illustrated in Fig.10, and the other is that the cross-connect is used as illustrated in Fig.11. In the second embodiment, the connection between the cross-connect and terminal equipment as illustrated in Fig.11 is made in either of the two ways: one is that input/output ports for optical circuits are used as shown in Fig.12 and the other is that input/output ports for electric circuits are used as shown in Fig.13.

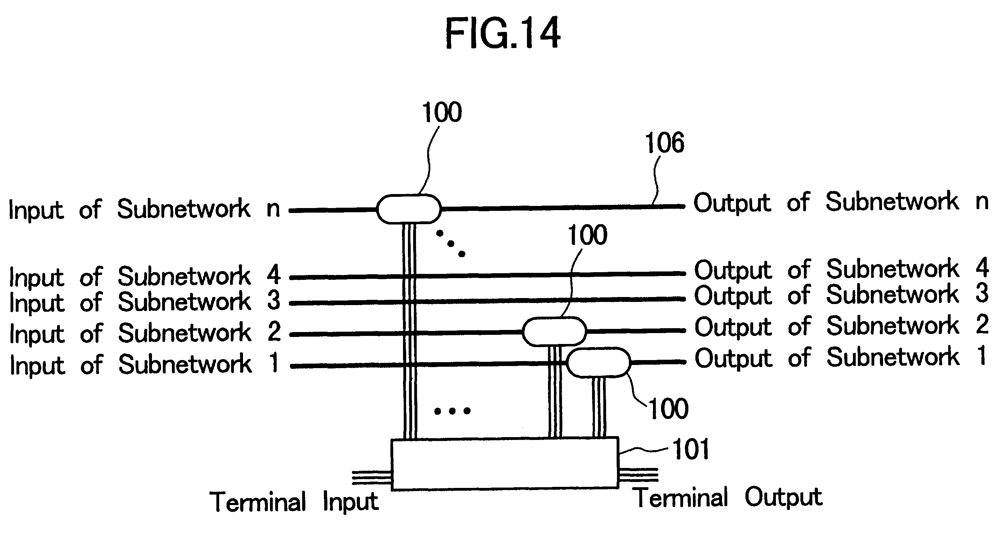

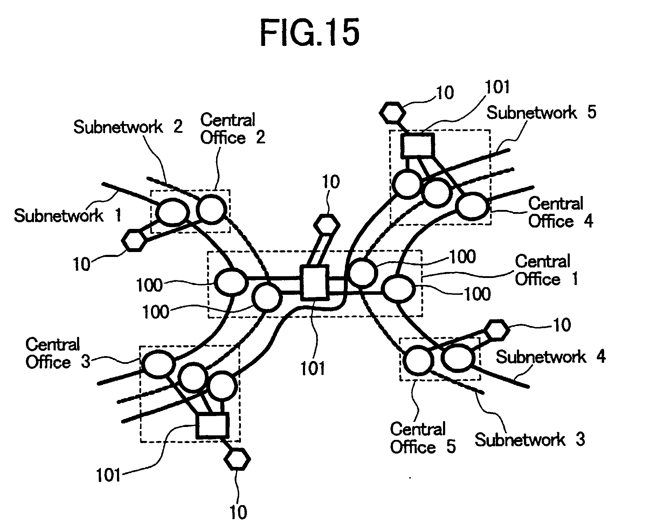

The first and second embodiments can be easily expanded so as to handle three or more sub-networks. The structure of a switching node which is connected to sub-networks from sub-network 1 up to sub-network n is illustrated in Fig.14. An optical circuit dropped from each sub-network is sent to a cross-connect, and every output optical circuit from the cross-connect is added to either sub-network. A third embodiment as shown in Fig.15 is a variation of the arrangements as shown in Figs. 6 and 8, in which sub-networks 3 and 4 passing through the same central offices as sub-networks 1 and 2 but having the transmission direction opposite to that of sub-networks 1 and 2 and also sub-network 5 connecting central offices 4 and 3 are added. In this case, bi-directional transmission lines are provided, for example, between central offices 2 and 3 and between central offices 4 and 5. Sub-network 5 is not connected to any switch at central office 1. Sub-network 5 exchanges the traffic with other sub-networks at central offices 3 and 4. Sub-network arrangement like this is particularly effective when there is much traffic between central offices 3 and 4.

Examples of networks that use more switching nodes are illustrated in Figs.4 and 5. The network arrangement as shown in Fig.1 and those as shown in Figs.4 and 5 are identical in transmission capacity distribution among central offices but different in the form of switch connection inside central offices. In the connections made in accordance with the invention as shown in Figs.4 and 5, every optical circuit on a transmission line does not terminate in a switching node; instead, all transmission lines are organized as a set of sub-networks consisting of wavelength multiplex transmission lines connected in series via wavelength add/drops and only the optical circuits running between sub-networks are inputted to cross-connects. As the number of circuits running between sub-networks decreases, the required switching capacity for both the wavelength add/drops and cross-connects decreases, heightening the effect of decreasing the required switch hardware scale as intended by this invention. To realize this, it is important to make sub-network division suited to a given transmission route arrangement and actual demand distribution. In the case as shown in Fig.4, central offices 4 and 8 have wavelength add/drops 100-8 and 100-5 which both belong to a same sub-network, but central offices 4 and 3 don't have such wavelength add/drops. Therefore, traffic from central office 4 to central office 3 requires transition between different sub-networks. This arrangement is effective if there is much demand from central office 4 to central office 8 and less demand from central office 4 to central office 3. However, if the arrangement as shown in Fig.5 is applied to the same demand distribution as above, since, contrary to the case of Fig.4, central offices 4 and 8 do not have wavelength add/drops which both belong to a same sub-network, but central offices 4 and 3 have such wavelength add/drops, more circuits require transition between sub-networks, which lessens the effect of this invention.

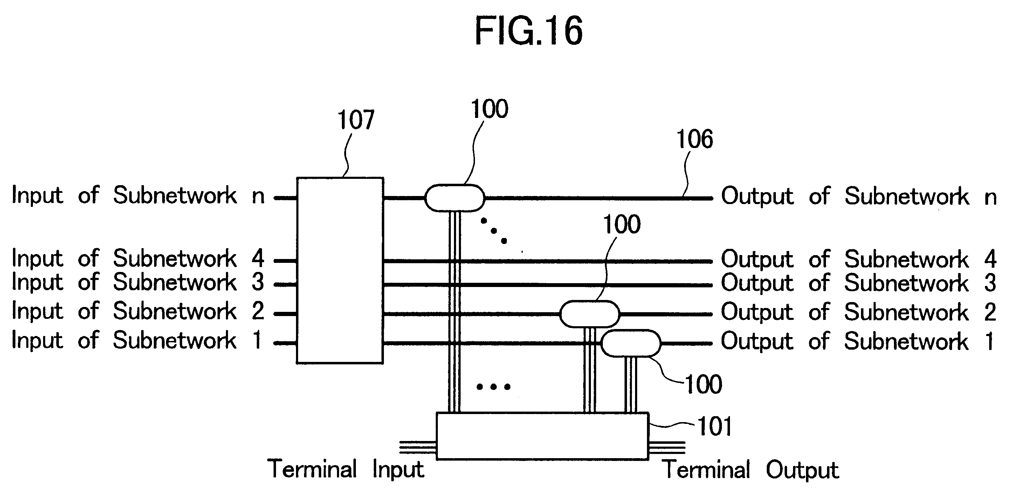

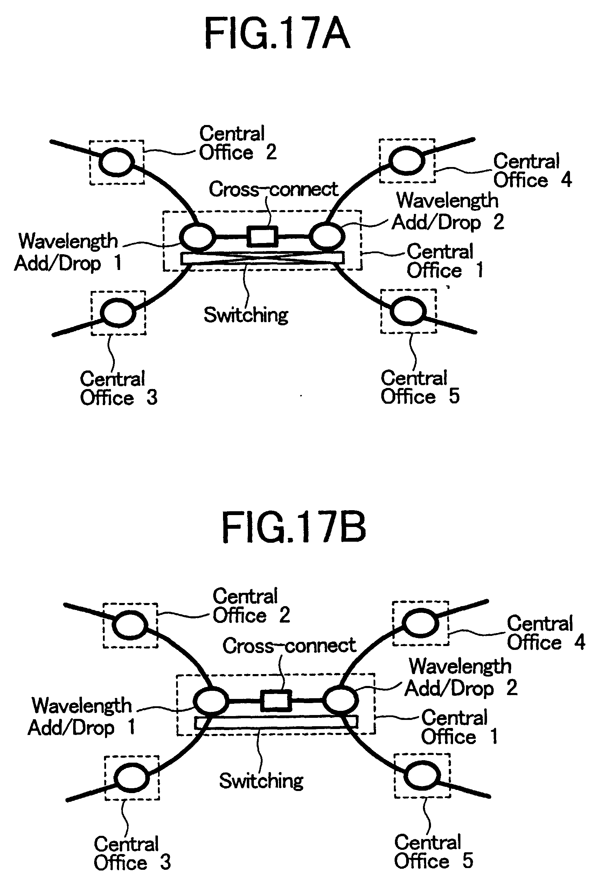

Actually, demand distribution varies with time. If this variation is small to the extent that a change in the sub-network arrangement is not effective, sub-network arrangement should be determined when a set of switches are installed in each central office. If the variation in demand distribution is considerable to the extent that a change in the sub-network arrangement is effective, it is desirable that the sub-network arrangement can be changed occasionally. Fig.16 shows an example of a switching node structure that enables occasional changes in the sub-network arrangement through a connection switching means for each wavelength multiplex fiber provided in the node. The connection switching means 107 establishes the relationship of correspondence between the group of input/output transmission lines and the group of wavelength add/drops in a desired way. If this node structure is used, transition between connection patterns of two sub-networks as shown in Fig.17 (a) and (b) can be made by the fiber switching means. In Fig.17 (a), the switching means connects input from central office 3 and wavelength add/drop 2 and also connects input from central office 5 and wavelength add/drop 1. In this case, two sub-networks are established: one consists of central offices 3, 1 and 4 interconnected and the other consists of central offices 5, 1 and 2 interconnected. On the other hand, in the connection pattern as shown in Fig.17 (b), one sub-network with central offices 3, 1 and 2 interconnected and one with central offices 4, 1 and 5 interconnected are established. For transition between connection patterns (a) and (b) to take place automatically, detection of demand pattern variation and coordination with an optimization algorithm are necessary.

This invention makes it possible to decrease the scale of equipment hardware required inside a switching node by dividing all transmission lines into sub-networks composed of wavelength multiplex transmission lines connected in series via wavelength add/drops, instead of the conventional approach in which all capacities to be inputted to a switching node are sent to a single switch.

### Industrial Applicability

The embodiments of this invention provide an optical fiber communication network equipment which makes it possible to decrease the scale of equipment hardware, so its industrial applicability is significantly high.

## Claims

1. Optical fiber communication network equipment having a first network and a second network, characterized in that:
part of wavelength multiplexed signal on said first network is divided into signals, which are added to said first or second network; and
part of wavelength multiplexed signal on said second network is divided into signals, which are added to said first or second network.

2. Optical fiber communication network equipment having a first network and a second network, characterized in that:
part of wavelength multiplexed signal on said first network is divided into signals, which are added to said first or second network.

3. Optical fiber communication network equipment having a first network and a second network, characterized in that:
wavelength add/drop 1 is inserted in said first network and
wavelength add/drop 2 is inserted in said second network; and
said wavelength add/drops 1 and 2 have the function to divide input wavelength multiplexed signals into signals for Drop and transit signals through their wavelength dividing means and also to wavelength-multiplex or combine signals for Add and transit signals for output; and
the drop ports of said wavelength add/drops 1 and 2 are connected to the input ports of a cross-connect; and
the add ports of said wavelength add/drops 1 and 2 are connected to the output ports of said cross-connect.

4. Optical fiber communication network equipment having a first network and a second network, characterized in that:
wavelength add/drop 1 is inserted in said first network and
wavelength add/drop 2 is inserted in said second network; and
said wavelength add/drop 1 has the function to divide input wavelength multiplexed signals into signals for Drop and transit signals through wavelength dividing means and also to wavelength-multiplex or combine signals for Add and transit signals for output; and
said wavelength add/drop 2 has the function to wavelength-multiplex or combine signals for Add and input signals from said second network for output; and
the drop ports of said wavelength add/drop 1 are connected to the input ports of a cross-connect; and
the add ports of said wavelength add/drops 1 and 2 are connected to the output ports of said cross-connect.

5. Optical fiber communication network equipment as defined in claim 1 having central offices 1, 2, and 3, characterized in that:
the first network passes through central offices 1 and 2, and the second network passes through central offices 1 and 3.

6. Optical fiber communication network equipment having central offices 1, 2 and 3, characterized in that:
a first network passes through central offices 1 and 2, and
a second network passes through central offices 1 and 3, and
a third network passes through central offices 1 and 2; and in said central office 1, part of wavelength multiplexed signal from said first network is divided into signals, which are added to said first or second network; and part of wavelength multiplexed signal from said second network is divided into signals, which are added to said first or second network; and input signals for a third network are outputted as output signals for the third network without being subject to any add/drop process.

7. Optical fiber communication network equipment as defined in claim 1 having central offices 1, 2, 3 and 4,
characterized in that:
the first network passes through central offices 1 and 2, and the second network passes through central offices 1 and 3; and
in said central office 1, either the first network or the second network can be chosen and connected with central office 4.
